# FASCICULE DE BREVET EUROPEEN

(11) **EP 3 521 604 B1**
(45) Date de publication et mention de la délivrance du brevet: **23.12.2020**
(21) Numéro de dépôt: 19151305.0
(22) Date de dépôt: 11.01.2019
(51) Int. Cl.: F02K 1/72, F02K 1/76

(54) **TURBOREACTEUR COMPORTANT UNE NACELLE EQUIPEE D'UN SYSTEME INVERSEUR COMPORTANT DES PORTES**
TURBOREAKTOR, DER EINE MIT EINEM SCHUBUMKEHRSYSTEM AUSGESTATTETE GONDEL MIT TÜREN UMFASST
TURBINE ENGINE COMPRISING A NACELLE PROVIDED WITH A REVERSER SYSTEM COMPRISING DOORS

(30) Priorité: 02.02.2018 FR 1850886
(43) Date de publication de la demande: 07.08.2019
(73) Titulaire: Airbus Operations S.A.S., 31060 Toulouse (FR)
(72) Inventeur: RIDRAY, Frédéric, 32600 L'ISLE JOURDAIN (FR); PIARD, Frédéric, 31170 TOURNEFEUILLE (FR)
(74) Mandataire: Gicquel, Olivier Yves Gérard

(56) Documents cités:
- EP-A2- 3 103 995
- US-A1- 2014 110 503

## Description

### DOMAINE TECHNIQUE

La présente invention concerne un turboréacteur double flux qui comporte une nacelle équipée d'un système inverseur comportant des portes, ainsi qu'un aéronef comportant au moins un tel turboréacteur double flux.

### ETAT DE LA TECHNIQUE ANTERIEURE

Un aéronef comporte un fuselage de chaque côté duquel est fixée une aile. Sous chaque aile est suspendu au moins un turboréacteur double flux avec une veine secondaire. Chaque turboréacteur double flux est fixé sous l'aile par l'intermédiaire d'un mât qui est fixé entre la structure de l'aile et la structure du turboréacteur double flux.

Le turboréacteur double flux comporte un moteur et une nacelle qui est fixée autour du moteur.

La nacelle comporte un système inverseur qui comprend une pluralité de portes extérieures, chacune étant mobile en rotation sur la structure de la nacelle entre une position stockée dans laquelle elle vient en continuité avec la surface extérieure de la nacelle et une position déployée vers l'extérieur dans laquelle elle ouvre une fenêtre dans la paroi de la nacelle pour expulser l'air du flux secondaire vers l'extérieur de la nacelle.

Certains systèmes inverseurs, comme par exemple celui décrit dans le document EP3103995, comportent également des portes intérieures, où chacune est mobile entre une position stockée dans laquelle elle est plaquée contre une surface intérieure de la nacelle autour de la veine secondaire, et une position déployée dans laquelle elle est positionnée en travers de la veine secondaire pour diriger le flux secondaire vers la fenêtre.

Actuellement, le déplacement des portes intérieures et extérieures nécessite un système de manœuvre qui bien que performant est relativement complexe et il est nécessaire de trouver un mécanisme différent.

### EXPOSE DE L'INVENTION

Un objet de la présente invention est de proposer un turboréacteur double flux qui comporte une nacelle équipée d'un système inverseur avec une pluralité de portes et avec un mécanisme d'ouverture/fermeture différent.

A cet effet, est proposé un turboréacteur double flux tel que revendiqué dans la revendication 1.

Un tel turboréacteur permet de simplifier le mécanisme actionnant le système inverseur et de dissocier le déplacement de l'ensemble mobile du déplacement des portes et l'utilisation d'un coulisseau en deux parties facilite le réglage du mécanisme.

L'invention propose également un aéronef comportant au moins un turboréacteur double flux selon l'une des variantes précédentes.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef comportant un turboréacteur double flux selon l'invention,
la Fig. 2 est une vue en perspective et de l'intérieur d'une partie d'une nacelle du turboréacteur double flux selon l'invention,
la Fig. 3 est une représentation schématique et en coupe d'un système inverseur selon l'invention en position stockée,
la Fig. 4 est une représentation similaire à celle de la Fig. 3 pour une position intermédiaire,
la Fig. 5 est une représentation similaire à celle de la Fig. 3 pour une position déployée,
la Fig. 6 montre une vue extérieure du système inverseur,
la Fig. 7 représente un schéma fonctionnel d'un procédé de déplacement d'un système inverseur selon l'invention,
la Fig. 8 montre une vue en perspective du coulisseau selon l'invention,
la Fig. 9 montre une vue de côté et en coupe brisée du coulisseau de la Fig. 8 selon les plans IX, et
la Fig. 10 montre une vue de dessus en coupe du coulisseau selon la ligne X-X de la Fig. 9.

### EXPOSE DETAILLE DE MODES DE REALISATION

Dans la description qui suit, les termes relatifs à une position sont pris en référence au sens d'écoulement de l'air dans un turboréacteur qui s'écoule donc de l'avant vers l'arrière de l'aéronef tandis que l'aéronef se déplace vers l'avant.

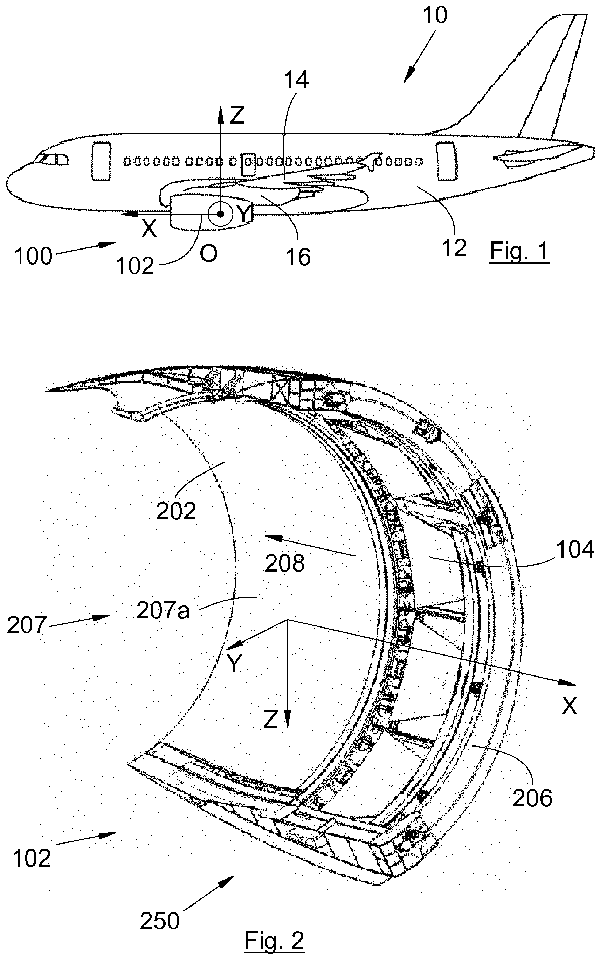

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

Le turboréacteur double flux 100 présente une nacelle 102, un moteur qui est logé à l'intérieur de la nacelle 102 sous forme d'un noyau et un carter de soufflante 206a en avant de la nacelle 102.

Dans la description qui suit, et par convention, on appelle X l'axe longitudinal du turboréacteur double flux 100 qui est parallèle à l'axe longitudinal de l'aéronef 10 ou axe de roulis, orienté positivement vers l'avant de l'aéronef 10, on appelle Y l'axe transversal qui est parallèle à l'axe de tangage de l'aéronef qui est horizontal lorsque l'aéronef est au sol, et Z l'axe vertical qui est parallèle à l'axe de lacet lorsque l'aéronef est au sol, ces trois directions X, Y et Z étant orthogonales entre elles et formant un repère orthonormé.

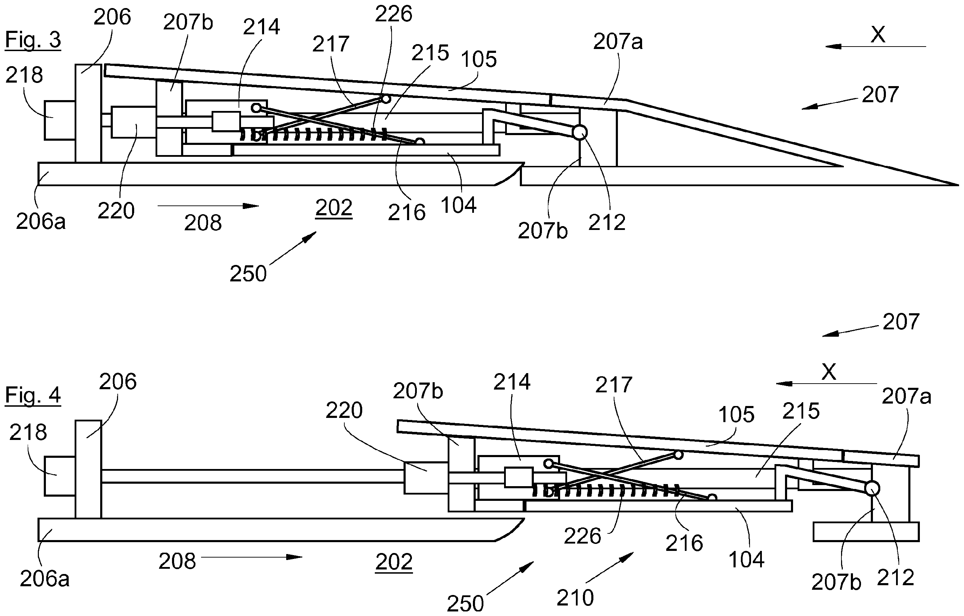

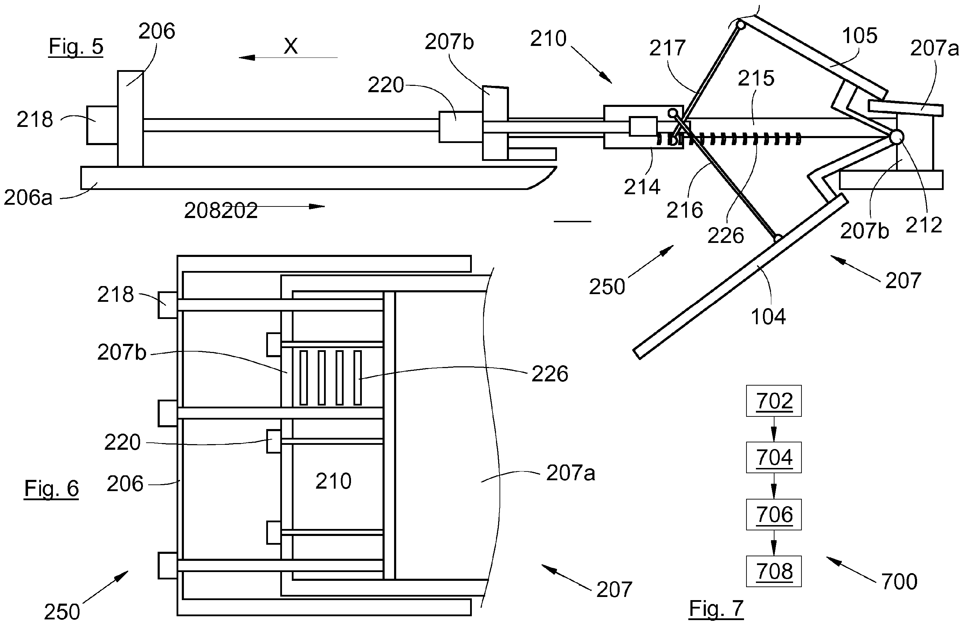

La Fig. 2 montre une partie de la nacelle 102 et les Figs. 3 à 5 montrent différentes positions d'un système inverseur 250 de la nacelle 102. La Fig. 6 montre une vue extérieure du système inverseur 250 en position déployée, mais sans les portes du système inverseur 250.

Le turboréacteur double flux 100 présente entre la nacelle 102 et le moteur, une veine secondaire 202 dans laquelle circule le flux secondaire 208 provenant de l'entrée d'air à travers la soufflante et qui s'écoule donc selon le sens d'écoulement qui va de l'amont vers l'aval.

La nacelle 102 présente une structure fixe 206 qui est montée fixe sur le carter de soufflante 206a.

Le système inverseur 250 présente un ensemble mobile 207 qui comprend un capot mobile 207a formant les parois de la tuyère et un cadre 207b. Le cadre 207b prend ici la forme d'un cylindre à parois ajourées. Le capot mobile 207a est fixé au et en aval du cadre 207b par rapport au sens d'écoulement.

L'ensemble mobile 207, par l'intermédiaire du cadre 207b, est monté mobile en translation selon une direction de translation globalement parallèle à l'axe longitudinal X sur la structure fixe 206 de la nacelle 102, et plus particulièrement ici sur la poutre 12heure et la poutre 6heure.

La translation du cadre 207b, et donc de l'ensemble mobile 207, est réalisée par tous systèmes de glissières appropriés comme par exemple des glissières entre la structure fixe 206 et le cadre 207b.

L'ensemble mobile 207, et donc le cadre 207b, est mobile entre une position avancée (Fig. 3) et une position reculée (Figs. 4, 5 et 6) et inversement. En position avancée, l'ensemble mobile 207, et donc le cadre 207b, est positionné le plus en avant possible par rapport au sens d'écoulement de manière à ce que le capot mobile 207a soit rapproché du carter de soufflante 206a. En position reculée, l'ensemble mobile 207, et donc le cadre 207b, est positionné le plus en arrière possible par rapport au sens d'écoulement de manière à ce que le capot mobile 207a soit éloigné du carter de soufflante 206a.

En position avancée, le capot mobile 207a et le carter de soufflante 206a se prolongent de manière à définir la surface extérieure de la veine secondaire 202.

En position reculée, le capot mobile 207a et le carter de soufflante 206a sont à distance et définissent entre eux une fenêtre 210 ouverte entre la veine secondaire 202 et l'extérieur de la nacelle 102. C'est-à-dire que l'air provenant du flux secondaire 208 traverse la fenêtre 210 pour rejoindre l'extérieur du turboréacteur double flux 100.

Le carter de soufflante 206a délimite la fenêtre 210 en amont par rapport à l'axe longitudinal X et le capot mobile 207a délimite la fenêtre 210 en aval par rapport à l'axe longitudinal X.

La nacelle 102 comporte une pluralité de portes intérieures 104 réparties sur la périphérie et à l'intérieur de la nacelle 102 en fonction de l'ouverture angulaire de la fenêtre 210 autour de l'axe longitudinal X.

Chaque porte intérieure 104 est montée articulée sur le cadre 207b entre une position stockée (Figs. 3 et 4) et une position déployée (Fig. 5) et inversement. Le passage de la position stockée à la position déployée s'effectue par une rotation de la porte intérieure 104 vers l'intérieur du turboréacteur 100.

La position stockée des portes intérieures 104 peut être adoptée lorsque le cadre 207b est en position avancée ou en position reculée. La position déployée des portes intérieures 104 ne peut être adoptée que lorsque le cadre 207b est en position reculée.

En position stockée, chaque porte intérieure 104 obture une zone de la partie ajourée du cadre 207b lorsque ce dernier est en position avancée et la même zone de la partie ajourée du cadre 207b et une zone de la fenêtre 210 lorsque le cadre 207b est en position reculée. En position déployée, la porte intérieure 104 n'obture pas ladite zone de la fenêtre 210 ni la partie ajourée du cadre 207b permettant le passage du flux secondaire 208 et la porte intérieure 104 s'étend vers le moteur, c'est-à-dire en travers de la veine secondaire 202.

Ainsi, en position stockée, chaque porte intérieure 104 est globalement dans le prolongement du capot mobile 207a et en position déployée, chaque porte intérieure 104 se positionne en travers de la veine secondaire 202 et dévie au moins une partie du flux secondaire 208 vers l'extérieur à travers la fenêtre 210, le flux est orienté vers l'avant à l'aide de portes extérieures 105 permettant de produire une contre-poussée et décrites ci-dessous.

En position avancée, chaque porte intérieure 104 se positionne à l'extérieur du carter de soufflante 206a.

Chaque porte intérieure 104 est articulée par un bord aval, par rapport au sens d'écoulement, à la partie aval du cadre 207b sur des charnières 212 fixées au cadre 207b tandis que le bord libre opposé se positionne vers l'amont en position stockée et vers le moteur en position déployée.

Le système inverseur 250 comporte également pour chaque porte intérieure 104, une porte extérieure 105. Les portes extérieures 105 sont réparties sur la périphérie et à l'extérieur de la nacelle 102 en fonction de l'ouverture angulaire de la fenêtre 210 autour de l'axe longitudinal X. Les portes extérieures 105 sont disposées à l'extérieur par rapport aux portes intérieures 104. Chaque porte extérieure 105 est montée en regard d'une porte intérieure 104 et la porte extérieure 105 et la porte intérieure 104 en regard constituent un couple de portes. Le système inverseur 250 comporte ainsi une pluralité de couples de portes 104, 105 disposées à l'intérieur de la nacelle 102.

Chaque porte extérieure 105 est montée articulée sur le cadre 207b entre une position stockée (Figs. 3 et 4) et une position déployée (Fig. 5) et inversement. Le passage de la position stockée à la position déployée s'effectue par une rotation de la porte extérieure 105 vers l'extérieur du turboréacteur 100. Les articulations des portes extérieures 105 sont globalement en regard des articulations des portes intérieures 104, ainsi comme cela est montré sur la Fig. 5, lorsque les portes intérieures 104 et les portes extérieures 105 sont déployées, elles forment globalement une continuité.

La position stockée des portes extérieures 105 peut être adoptée lorsque le cadre 207b est en position avancée ou en position reculée. La position déployée ne peut être adoptée que lorsque le cadre 207b est en position reculée. La position déployée, respectivement stockée, des portes extérieures 105 est synchronisée avec la position déployée, respectivement stockée, des portes intérieures 104.

En position stockée, chaque porte extérieure 105 obture une zone de la partie ajourée du cadre 207b lorsque ce dernier est en position avancée et la même zone de la partie ajourée du cadre 207b et une zone de la fenêtre 210 lorsque le cadre 207b est en position reculée. En position déployée, la porte extérieure 105 n'obture pas ladite zone de la fenêtre 210 ni la partie ajourée du cadre 207b et s'étend vers l'extérieur de la nacelle 102 permettant le passage du flux secondaire 208.

Ainsi, en position stockée, chaque porte extérieure 105 est globalement dans le prolongement du capot mobile 207a et en position déployée, chaque porte extérieure 105 s'ouvre vers l'extérieur et dévie la partie du flux secondaire 208 qui a été préalablement déviée par les portes intérieures 104 à travers la fenêtre 210.

En position stockée, les portes extérieures 105 sont disposées entre le capot mobile 207a et la structure fixe 206 de manière à constituer une paroi extérieure de la nacelle 102 qui est donc en contact avec le flux d'air qui s'écoule autour de la nacelle 102.

En position avancée, chaque porte extérieure 105 se positionne à l'extérieur des portes intérieures 104.

Chaque porte extérieure 105 est articulée par un bord aval, par rapport au sens d'écoulement, à la partie aval du cadre 207b sur des charnières 212 fixées au cadre 207b tandis que le bord libre opposé se positionne vers l'amont en position stockée et vers l'extérieur en position déployée.

Dans le mode de réalisation de l'invention présenté sur les Figs. 3 à 5, les charnières 212 des portes intérieures 104 et des portes extérieures 105 sont confondues, mais elles pourraient être décalées.

Pour chaque couple de portes 104, 105, le système inverseur 250 présente un coulisseau 214 associé audit couple de portes 104, 105. Le coulisseau 214 est monté mobile en translation selon une direction parallèle à la direction de translation sur le cadre 207b. Le coulisseau 214 est ainsi mobile entre une première position et une deuxième position.

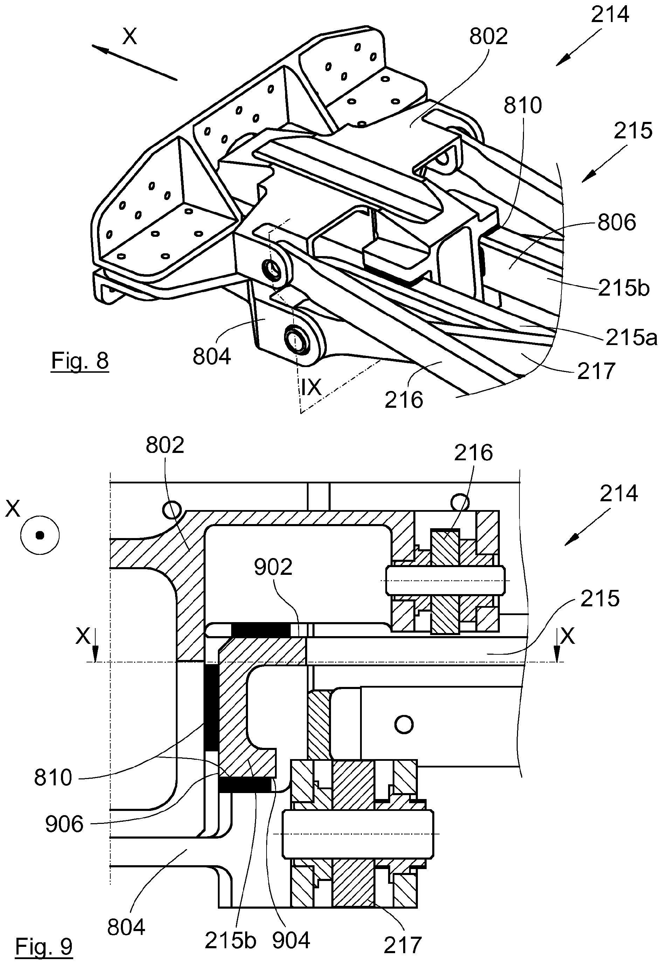

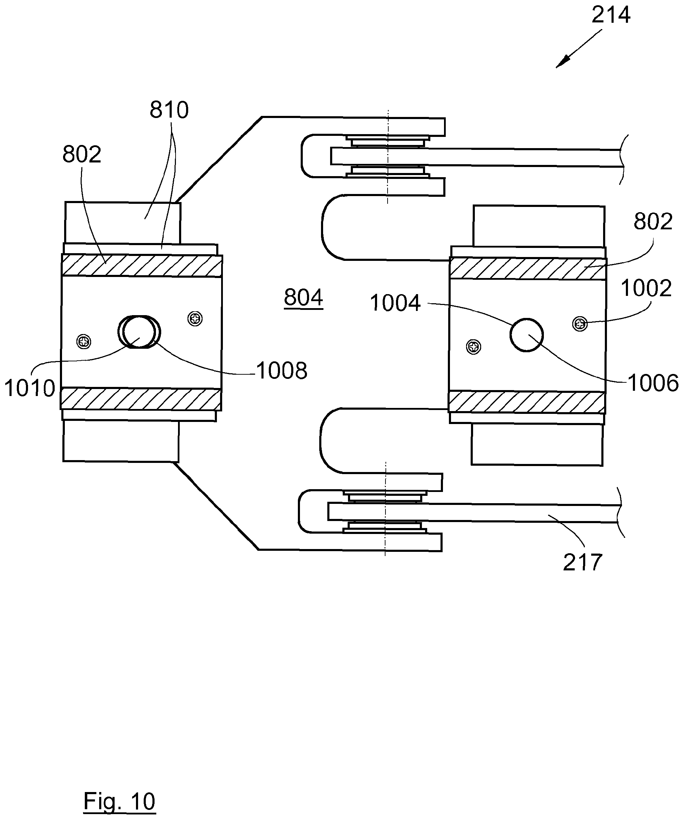

Comme le montrent les Figs. 8 à 10, le coulisseau 214 est constitué d'un coulisseau supérieur 802 et d'un coulisseau inférieur 804 qui sont fixés l'un à l'autre et fonctionnent donc comme un unique coulisseau 214. Comme expliqué ci-dessous, l'utilisation d'un coulisseau supérieur 802 et d'un coulisseau inférieur 804 fixés l'un à l'autre par des moyens de fixation démontables permet un réglage minutieux du mécanisme.

Le passage de la position stockée à la position déployée de chaque porte 104, 105 dudit couple est mécaniquement associé au passage du coulisseau 214 de la première position à la deuxième position et inversement.

Dans le mode de réalisation particulier présenté ici, le système inverseur 250 présente également, pour chaque coulisseau 214, un premier système de transmission 216 qui, pour la porte intérieure 104 associée audit coulisseau 214, prend ici la forme d'une première tringle articulée par une extrémité à la porte intérieure 104 et articulée par une autre extrémité au coulisseau supérieur 802 dudit coulisseau 214.

De la même manière, le système inverseur 250 présente également, pour ledit coulisseau 214, un deuxième système de transmission 217 qui, pour la porte extérieure 105 associée audit coulisseau 214, prend ici la forme d'une deuxième tringle articulée par une extrémité à la porte extérieure 105 et articulée par une autre extrémité au coulisseau inférieur 804 dudit coulisseau 214.

Le premier système de transmission 216 est prévu pour faire passer la porte intérieure 104 associée au coulisseau 214, de la position stockée à la position déployée simultanément au passage du coulisseau 214 de la première position à la deuxième position afin d'ouvrir la porte intérieure 104 et inversement.

Le deuxième système de transmission 217 est prévu pour faire passer la porte extérieure 105 associée au coulisseau 214, de la position stockée à la position déployée simultanément au passage du coulisseau 214 de la première position à la deuxième position afin d'ouvrir la porte extérieure 105 et inversement.

Dans le mode de réalisation de l'invention présenté ici, la première position consiste à déplacer le coulisseau 214 vers l'avant tandis que la deuxième position consiste à déplacer le coulisseau 214 vers l'arrière.

La translation du coulisseau 214 est réalisée par des systèmes de glissières entre le cadre 207b et le coulisseau 214 qui peut prendre par exemple la forme d'un rail 215 du cadre 207b.

Le passage de la position avancée du cadre 207b à la position reculée du cadre 207b et déployée des portes intérieures 104 et des portes extérieures 105 consiste donc, à partir de la position avancée du cadre 207b et donc des positions stockées des portes intérieures 104 et extérieures 105, à reculer le cadre 207b par translation par rapport au cadre avant 206 pour atteindre la position reculée pour le cadre 207b et les positions stockées des portes intérieures 104 et extérieures 105, puis à déplacer chaque coulisseau 214 de la première position à la deuxième position pour faire passer les portes intérieures 104 et les portes extérieures 105 de la position stockée à la position déployée.

Le déplacement inverse permet de revenir à la position avancée.

La nacelle 102 comporte également un ensemble d'actionneurs 218 et 220 assurant le déplacement en translation du cadre 207b et du coulisseau 214. Chaque actionneur 218, 220 est commandé par une unité de contrôle, par exemple du type processeur, qui commande les déplacements dans un sens ou dans l'autre selon les besoins de l'aéronef 10.

Chaque actionneur 218, 220 peut prendre par exemple la forme d'un vérin électrique à billes ou tous autres types de vérins appropriés.

Pour assurer le déplacement du cadre 207b, la nacelle 102 comporte au moins un premier actionneur 218 qui sont ici au nombre de trois, et qui sont fixés entre la structure fixe 206 de la nacelle 102, et le cadre 207b. Chaque premier actionneur 218 est ainsi prévu pour assurer, à partir de la position avancée du cadre 207b et donc des positions stockées des portes intérieures 104 et extérieures 105, un déplacement en translation du cadre 207b jusqu'à la position reculée, et inversement. Lors du déplacement du cadre 207b, chaque coulisseau 214 qui est porté par le cadre 207b suit le même déplacement.

Pour assurer le déplacement de chaque coulisseau 214, et donc de chaque porte intérieure 104 et extérieure 105, le système inverseur 250 comporte, pour chaque coulisseau 214, un deuxième actionneur 220 qui est fixé entre le cadre 207b et le coulisseau 214. Le deuxième actionneur 220 est prévu pour assurer le déplacement en translation du coulisseau 214 de la première position à la deuxième position.

Le deuxième actionneur 220 est distinct de chaque premier actionneur 218 et ils peuvent donc être déplacés indépendamment les uns des autres. Le déplacement de l'ensemble mobile 207 de la position avancée à la position reculée est dissocié du déplacement des portes 104 et 105.

La Fig. 7 montre un schéma fonctionnel d'un procédé de déplacement 700 du système inverseur 250 qui comprend, à partir de la position avancée de l'ensemble mobile 207, des positions stockées des portes intérieures 104 et extérieures 105, de la première position des coulisseaux 214 :
- une première étape d'activation 702 au cours de laquelle chaque premier actionneur 218 est activé pour assurer le déplacement en translation de l'ensemble mobile 207 et donc du cadre 207b de la position avancée à la position reculée, puis
- une deuxième étape d'activation 704 au cours de laquelle chaque deuxième actionneur 220 est activé pour assurer le déplacement en translation du coulisseau 214 associé de la première position à la deuxième position, puis
- une troisième étape d'activation 706 au cours de laquelle chaque deuxième actionneur 220 est activé pour assurer le déplacement en translation du coulisseau 214 associé de la deuxième position à la première position, puis
- une quatrième étape d'activation 708 au cours de laquelle chaque premier actionneur 218 est activé pour assurer le déplacement en translation de l'ensemble mobile 207 et donc du cadre 207b de la position reculée à la position avancée.

L'invention a été plus particulièrement décrite dans le cas d'une nacelle sous une aile mais elle peut s'appliquer à une nacelle située à l'arrière du fuselage.

Pour contrôler encore mieux le flux secondaire 208, la nacelle 102 comporte au moins un déflecteur 226 (s'il y en a plusieurs c'est alors une grille de type cascade) qui est disposé autour de la veine secondaire 202 au niveau de l'entrée de la fenêtre 210, c'est-à-dire globalement au niveau de la zone de passage de la veine secondaire 202 à la fenêtre 210 dans une zone où l'écoulement a le plus de mal à tourner pour créer de la poussée inversée (c'est-à-dire vers l'avant de la nacelle).

Chaque déflecteur 226 est fixé à l'ensemble mobile 207 de la nacelle 102. Chaque déflecteur 226 prend la forme d'un aileron qui oriente le flux secondaire 208 vers la fenêtre 210 puis vers l'avant du turboréacteur double flux 100. Dans le mode de réalisation de l'invention présenté ici, en position de fermeture, chaque déflecteur 226 est logé dans la structure fixe 206 entre la porte extérieure 105 et le carter de soufflante 206a.

Dans le mode de réalisation de l'invention présenté aux Figs. 8 et 9, le système de glissière entre le cadre 207b et le coulisseau 214 prend la forme d'un rail 215 qui est constitué d'un rail bâbord 215a et d'un rail tribord 215b qui sont parallèles entre eux, en regard l'un de l'autre et à distance l'un de l'autre pour définir entre eux un espace 806. Le rail bâbord 215a et le rail tribord 215b comportent chacun une face supérieure 902 et une face inférieure 904 qui sont parallèles entre elles. Le rail bâbord 215a comporte une face intérieure 906 qui est orientée vers la face intérieure 906 du rail tribord 215b pour délimiter entre elles, l'espace 806.

Le coulisseau 214 est disposé dans l'espace 806.

Le coulisseau 214 présente pour la face supérieure 902 du rail bâbord 215a et pour la face supérieure 902 du rail tribord 215b, une face d'appui supérieure qui vient en appui contre ladite face supérieure 902 pour assurer un contact glissant.

Le coulisseau 214 présente pour la face inférieure 904 du rail bâbord 215a et du rail tribord 215b, une face d'appui inférieure qui vient en appui contre ladite face inférieure 904 pour assurer un contact glissant.

Le coulisseau 214 présente également pour la face intérieure 906 du rail bâbord 215a, une face d'appui intérieure qui vient en appui contre ladite face intérieure 906 pour assurer un contact glissant.

Le coulisseau 214 présente également pour la face intérieure 906 du rail tribord 215b, une face d'appui intérieure qui vient en appui contre ladite face intérieure 906 pour assurer un contact glissant.

Chaque face d'appui supérieure est constituée par une surface du coulisseau supérieur 802, tandis que chaque face d'appui inférieure est constituée par une surface du coulisseau inférieur 804.

Dans le mode de réalisation de l'invention présenté sur les Figs. 8 à 10, chaque face d'appui intérieure est constituée par une surface du coulisseau supérieur 802, mais dans un autre mode de réalisation, elle peut être constituée par une surface du coulisseau inférieur 804.

Dans le mode de réalisation de l'invention présenté sur les Figs. 8 à 10, le coulisseau supérieur 802 prend la forme d'une arche dont chaque pied est fixé au coulisseau inférieur 804 ici par quatre vis 1002.

Afin d'assurer le positionnement entre le coulisseau supérieur 802 et le coulisseau inférieur 804, l'un des pieds présente un perçage oblong 1006 et l'autre pied présente un perçage circulaire 1004 dont le centre est aligné avec l'axe longitudinal du perçage oblong 1006, tandis que le coulisseau inférieur 804 présente pour chaque perçage 1004, 1006, un plot circulaire 1008, 1010 qui s'insère dans ledit perçage 1004, 1006 de manière ajustée avec un jeu précis.

Les moyens de fixation ainsi mis en œuvre entre le coulisseau supérieur 802 et le coulisseau inférieur 804 permettent un ajustement du positionnement des deux coulisseaux 802 et 804 l'un par rapport à l'autre avant la fixation définitive.

Pour ajuster la distance du coulisseau supérieur 802 par rapport au coulisseau inférieur 804, il est possible de positionner des cales entre eux, c'est-à-dire ici entre le coulisseau inférieur 804 et les pieds du coulisseau supérieur 802.

Pour faciliter le glissement du coulisseau 214 sur les rails 215a-b, chaque surface d'appui comporte un patin 810 fixé à ladite surface d'appui et qui s'appuie contre la surface du rail 215a-b qui est en regard. Chaque patin 810 est réalisé par exemple en téflon.

En cas de besoin, il est alors aisé de remplacer chaque patin 810 afin de maintenir un bon glissement entre les rails 215a-b et le coulisseau 214.

Pour faciliter le réglage du mécanisme, chaque patin 810 présente une épaisseur réglable et prend par exemple la forme d'une cale multicouche pelable.

Il est également possible de prévoir la mise en place d'une cale, par exemple une cale multicouche pelable entre le coulisseau 214 et chaque patin 810.

## Revendications

1. Turboréacteur double flux (100) comportant un moteur, une nacelle (102) entourant le moteur et un carter de soufflante, où une veine secondaire (202) d'un flux secondaire (208) est délimitée entre la nacelle (102) et le moteur et dans laquelle un flux d'air circule selon un sens d'écoulement, ladite nacelle (102) comportant :
- une structure fixe (206) attachée au carter de soufflante (206a),
- un système inverseur (250) présentant :
- un ensemble mobile (207) présentant un capot mobile (207a) et un cadre (207b), le capot mobile (207a) étant fixé au et en aval du cadre (207b) par rapport au sens d'écoulement, l'ensemble mobile (207) étant mobile en translation sur la structure fixe (206) selon une direction de translation entre une position avancée dans laquelle l'ensemble mobile (207) est positionné de manière à ce que le capot mobile (207a) soit rapproché du carter de soufflante (206a) et une position reculée dans laquelle l'ensemble mobile (207) est positionné de manière à ce que le capot mobile (207a) soit éloigné du carter de soufflante (206a) pour définir entre eux une fenêtre (210) ouverte entre la veine secondaire (202) et l'extérieur de la nacelle (102),
- une pluralité de couples de portes, chaque couple étant formé par une porte intérieure (104) et une porte extérieure (105) disposée en regard de la porte intérieure (104), les portes intérieures (104) étant réparties sur la périphérie et à l'intérieur de la nacelle (102), les portes extérieures (105) étant réparties sur la périphérie et à l'extérieur de la nacelle (102), chaque porte (104, 105) étant montée articulée par un bord aval, par rapport au sens d'écoulement, sur le cadre (207b) entre une position stockée dans laquelle elle obture une zone de la fenêtre (210) et une position déployée dans laquelle elle n'obture pas ladite zone de la fenêtre (210), les portes intérieures (104) s'étendant vers le moteur en position déployée, les portes extérieures (105) s'étendant vers l'extérieur de la nacelle (102) en position déployée et étant disposées entre le capot mobile (207a) et la structure fixe (206) en position stockée de manière à constituer une paroi extérieure de la nacelle (102),
- pour chaque couple de portes (104, 105), un coulisseau (214) associé audit couple de portes (104, 105), ledit coulisseau (214) étant monté mobile en translation parallèlement à la direction de translation sur le cadre (207b) entre une première position et une deuxième position, où le passage de la position stockée à la position déployée de chaque porte (104, 105) dudit couple est mécaniquement associé au passage du coulisseau (214) de la première position à la deuxième position et inversement, chaque coulisseau (214) étant constitué d'un coulisseau supérieur (802) et d'un coulisseau inférieur (804) fixés l'un à l'autre par des moyens de fixation démontables,
- pour chaque coulisseau (214), une première tringle (216) articulée par une extrémité à la porte intérieure (104) et articulée par une autre extrémité au coulisseau supérieur (802) dudit coulisseau (214), et une deuxième tringle (217) articulée par une extrémité à la porte extérieure (105) et articulée par une autre extrémité au coulisseau inférieur (804) dudit coulisseau (214), et
- pour chaque coulisseau (214), un deuxième actionneur (220) prévu pour assurer le déplacement en translation du coulisseau (214) de la première position à la deuxième position et inversement, et
- au moins un premier actionneur (218) prévu pour assurer le déplacement en translation du cadre (207b) de la position avancée à la position reculée et inversement.

2. Turboréacteur double flux (100) selon la revendication 1, **caractérisé en ce que** le cadre (207b) comporte un rail (215) le long duquel le coulisseau (214) se déplace en translation entre la première position et la deuxième position, **en ce que** le rail (215) comporte un rail bâbord (215a) et un rail tribord (215b) qui sont parallèles entre eux, **en ce que** le rail bâbord (215a) et le rail tribord (215b) comportent chacun une face supérieure (902) et une face inférieure (904) qui sont parallèles entre elles, **en ce que** le rail bâbord (215a) comporte une face intérieure (906), **en ce que** le rail tribord (215b) comporte une face intérieure (906) orientée vers la face intérieure (906) du rail bâbord (215a) pour délimiter entre elles, un espace (806), **en ce que** le coulisseau (214) est disposé dans l'espace (806), **en ce que** le coulisseau (214) présente pour la face supérieure (902) du rail bâbord (215a) et pour la face supérieure (902) du rail tribord (215b), une face d'appui supérieure en appui contre ladite face supérieure (902), **en ce que** le coulisseau (214) présente pour la face inférieure (904) du rail bâbord (215a) et du rail tribord (215b), une face d'appui inférieure en appui contre ladite face inférieure (904), **en ce que** le coulisseau (214) présente pour la face intérieure (906) du rail bâbord (215a), une face d'appui intérieure en appui contre ladite face intérieure (906), et **en ce que** le coulisseau (214) présente pour la face intérieure (906) du rail tribord (215b), une face d'appui intérieure en appui contre ladite face intérieure (906).

3. Turboréacteur double flux (100) selon la revendication 2, **caractérisé en ce que** chaque face d'appui supérieure est constituée par une surface du coulisseau supérieur (802), **en ce que** chaque face d'appui inférieure est constituée par une surface du coulisseau inférieur (804), et **en ce que** chaque face d'appui intérieure est constituée par une surface du coulisseau supérieur (802).

4. Turboréacteur double flux (100) selon la revendication 2, **caractérisé en ce que** chaque face d'appui supérieure est constituée par une surface du coulisseau supérieur (802), **en ce que** chaque face d'appui inférieure est constituée par une surface du coulisseau inférieur (804), et **en ce que** chaque face d'appui intérieure est constituée par une surface du coulisseau inférieur (804).

5. Turboréacteur double flux (100) selon l'une des revendications 2 à 4, **caractérisé en ce que** le coulisseau supérieur (802) prend la forme d'une arche dont chaque pied est fixé au coulisseau inférieur (804), **en ce que** l'un des pieds présente un perçage oblong (1006), **en ce que** l'autre pied présente un perçage circulaire (1004) dont le centre est aligné avec l'axe longitudinal du perçage oblong (1006), et **en ce que** le coulisseau inférieur (804) présente pour chaque perçage (1004, 1006), un plot circulaire (1008, 1010) qui s'insère dans ledit perçage (1004, 1006) de manière ajustée avec un jeu précis.

6. Turboréacteur double flux (100) selon l'une des revendications 2 à 5, **caractérisé en ce que** chaque surface d'appui comporte un patin (810) fixé à ladite surface d'appui et qui s'appuie contre la surface du rail (215a-b) en regard.

7. Turboréacteur double flux (100) selon la revendication 6, **caractérisé en ce que** chaque patin (810) présente une épaisseur réglable.

8. Aéronef (10) comportant au moins un turboréacteur double flux (100) selon l'une des revendications précédentes.

## Patentansprüche

1. Zweistrom-Turbinenstrahltriebwerk (100), umfassend einen Antrieb, eine den Antrieb umgebende Gondel (102) und ein Gebläsegehäuse, wobei ein Sekundärstromkanal (202) eines Sekundärstroms (208) zwischen der Gondel (102) und dem Antrieb begrenzt ist und wobei ein Luftstrom in einer Strömungsrichtung zirkuliert, wobei die Gondel (102) Folgendes umfasst:
- eine am Gebläsegehäuse (206a) befestigte feste Struktur (206),
- ein Umkehrsystem (250), das Folgendes aufweist:
- eine bewegliche Anordnung (207), die eine bewegliche Abdeckung (207a) und einen Rahmen (207b) aufweist, wobei die bewegliche Abdeckung (207a) am Rahmen (207b) und in Bezug auf die Strömungsrichtung stromabwärts desselben befestigt ist, wobei die bewegliche Anordnung (207) auf der festen Struktur (206) in einer Translationsrichtung zwischen einer vorgeschobenen Position, in der die bewegliche Anordnung (207) so positioniert ist, dass die bewegliche Abdeckung (207a) dem Gebläsegehäuse (206a) angenähert ist, und einer zurückgezogenen Position, in der die bewegliche Anordnung (207) so positioniert ist, dass die bewegliche Abdeckung (207a) vom Gebläsegehäuse (206a) entfernt ist, um dazwischen ein offenes Fenster (210) zwischen dem Sekundärstromkanal (202) und dem Äußeren der Gondel (102) zu definieren, translatorisch bewegbar ist,
- mehrere Türpaare, wobei jedes Paar durch eine Innentür (104) und eine der Innentür (104) gegenüberliegende Außentür (105) ausgebildet ist, wobei die Innentüren (104) über den Umfang und innerhalb der Gondel (102) verteilt sind, wobei die Außentüren (105) über den Umfang und außerhalb der Gondel (102) verteilt sind, wobei jede Tür (104, 105) durch eine in Bezug auf die Strömungsrichtung stromabwärtige Kante zwischen einer eingefahrenen Position, in der sie einen Bereich des Fensters (210) verschließt, und einer ausgefahrenen Position, in der sie den Bereich des Fensters (210) nicht verschließt, gelenkig am Rahmen (207b) montiert ist, wobei die Innentüren (104) sich in der ausgefahrenen Position zum Antrieb hin erstrecken, wobei die Außentüren (105) sich in der ausgefahrenen Position zur Außenseite der Gondel (102) hin erstrecken und in der eingefahrenen Position zwischen der beweglichen Abdeckung (207a) und der festen Struktur (206) angeordnet sind, um eine Außenwand der Gondel (102) zu bilden,
- für jedes Türpaar (104, 105) einen mit dem Türpaar (104, 105) verbundenen Schieber (214), wobei der Schieber (214) parallel zur Translationsrichtung auf dem Rahmen (207b) zwischen einer ersten Position und einer zweiten Position translatorisch bewegbar montiert ist, wobei der Übergang von der eingefahrenen Position in die ausgefahrene Position jeder Tür (104, 105) des Paars mechanisch mit dem Übergang des Schiebers (214) von der ersten Position in die zweite Position verbunden ist und umgekehrt, wobei jeder Schieber (214) aus einem oberen Schieber (802) und einem unteren Schieber (804) gebildet ist, die durch abnehmbare Befestigungsmittel aneinander befestigt sind,
- für jeden Schieber (214) eine erste Stange (216), die mit einem Ende an der Innentür (104) angelenkt ist und mit einem anderen Ende am oberen Schieber (802) des Schiebers (214) angelenkt ist, und eine zweite Stange (217), die mit einem Ende an der Außentür (105) angelenkt ist und mit einem anderen Ende am unteren Schieber (804) des Schiebers (214) angelenkt ist, und
- für jeden Schieber (214) einen zweiten Aktor (220), der dazu vorgesehen ist, die translatorische Verschiebung des Schiebers (214) von der ersten Position in die zweite Position und umgekehrt zu gewährleisten, und
- zumindest einen ersten Aktor (218), der dazu vorgesehen ist, die translatorische Verschiebung des Rahmens (207b) von der vorgeschobenen Position in die zurückgezogene Position und umgekehrt zu gewährleisten.

2. Zweistrom-Turbinenstrahltriebwerk (100) nach Anspruch 1, **dadurch gekennzeichnet, dass** der Rahmen (207b) eine Schiene (215) umfasst, entlang derer sich der Schieber (214) zwischen der ersten Position und der zweiten Position translatorisch bewegt, dadurch, dass die Schiene (215) eine backbordseitige Schiene (215a) und eine steuerbordseitige Schiene (215b) umfasst, die parallel zueinander sind, dadurch, dass die backbordseitige Schiene (215a) und die steuerbordseitige Schiene (215b) jeweils eine Oberseite (902) und eine Unterseite (904) umfassen, die parallel zueinander sind, dadurch, dass die backbordseitige Schiene (215a) eine Innenseite (906) umfasst, dadurch, dass die steuerbordseitige Schiene (215b) eine zur Innenseite (906) der backbordseitigen Schiene (215a) hin gerichtete Innenseite (906) umfasst, um dazwischen einen Raum (806) zu begrenzen, dadurch, dass der Schieber (214) im Raum (806) angeordnet ist, dadurch, dass der Schieber (214) für die Oberseite (902) der backbordseitigen Schiene (215a) und für die Oberseite (902) der steuerbordseitigen Schiene (215b) eine an der Oberseite (902) anliegende obere Anlagefläche aufweist, dadurch, dass der Schieber (214) für die Unterseite (904) der backbordseitigen Schiene (215a) und der steuerbordseitigen Schiene (215b) eine an der Unterseite (904) anliegende untere Anlagefläche aufweist, dadurch, dass der Schieber (214) für die Innenseite (906) der backbordseitigen Schiene (215a) eine an der Innenseite (906) anliegende innere Anlagefläche aufweist, und dadurch, dass der Schieber (214) für die Innenseite (906) der steuerbordseitigen Schiene (215b), eine an der Innenseite (906) anliegende innere Anlagefläche aufweist.

3. Zweistrom-Turbinenstrahltriebwerk (100) nach Anspruch 2, **dadurch gekennzeichnet, dass** jede obere Anlagefläche durch eine Fläche des oberen Schiebers (802) gebildet ist, dadurch, dass jede untere Anlagefläche durch eine Fläche des unteren Schiebers (804) gebildet ist, und dadurch, dass jede innere Anlagefläche durch eine Fläche des oberen Schiebers (802) gebildet ist.

4. Zweistrom-Turbinenstrahltriebwerk (100) nach Anspruch 2, **dadurch gekennzeichnet, dass** jede obere Anlagefläche durch eine Fläche des oberen Schiebers (802) gebildet ist, dadurch, dass jede untere Anlagefläche durch eine Fläche des unteren Schiebers (804) gebildet ist, und dadurch, dass jede innere Anlagefläche durch eine Fläche des unteren Schiebers (804) gebildet ist.

5. Zweistrom-Turbinenstrahltriebwerk (100) nach einem der Ansprüche 2 bis 4, **dadurch gekennzeichnet, dass** der obere Schieber (802) die Form eines Bogens annimmt, dessen Schenkel jeweils am unteren Schieber (804) befestigt sind, dadurch, dass einer der Schenkel eine längliche Bohrung (1006) aufweist, dadurch, dass der andere Schenkel eine kreisförmige Bohrung (1004) aufweist, deren Mitte mit der Längsachse der länglichen Bohrung (1006) fluchtet, und dadurch, dass der untere Schieber (804) für jede Bohrung (1004, 1006) einen kreisförmigen Stift (1008, 1010) aufweist, der sich mit einem präzisen Spiel genau in die Bohrung (1004, 1006) einpasst.

6. Zweistrom-Turbinenstrahltriebwerk (100) nach einem der Ansprüche 2 bis 5, **dadurch gekennzeichnet, dass** jede Anlagefläche einen Schuh (810) umfasst, der an der Anlagefläche befestigt ist und an der gegenüberliegenden Fläche der Schiene (215a-b) anliegt.

7. Zweistrom-Turbinenstrahltriebwerk (100) nach Anspruch 6, **dadurch gekennzeichnet, dass** jeder Schuh (810) eine einstellbare Dicke aufweist.

8. Luftfahrzeug (10), umfassend zumindest ein Zweistrom-Turbinenstrahltriebwerk (100) nach einem der vorangehenden Ansprüche.

## Claims

1. Turbofan (100) having an engine, a nacelle (102) surrounding the engine and a fan casing, wherein a secondary duct (202) for a secondary flow (208) is delimited between the nacelle (102) and the engine and wherein a flow of air circulates in a flow direction, said nacelle (102) having:
- a fixed structure (206) attached to the fan casing (206a),
- a reverser system (250) having:
- a mobile assembly (207) having a mobile cowl (207a) and a frame (207b), the mobile cowl (207a) being fastened to and downstream of the frame (207b) relative to the flow direction, the mobile assembly (207) being able to move in translation on the fixed structure (206) in a direction of translation between an advanced position in which the mobile assembly (207) is positioned such that the mobile cowl (207a) is close to the fan casing (206a) and a retracted position in which the mobile assembly (207) is positioned such that the mobile cowl (207a) is distanced from the fan casing (206a) so as to define between them a window (210) that is open between the secondary duct (202) and the exterior of the nacelle (102),
- a plurality of pairs of doors, each pair being formed by an inner door (104) and an outer door (105) that is disposed facing the inner door (104), the inner doors (104) being distributed over the periphery of and inside the nacelle (102), the outer doors (105) being distributed over the periphery of and outside the nacelle (102), each door (104, 105) being mounted so as to be articulated by a downstream edge, relative to the flow direction, on the frame (207b) between a stowed position in which it closes off a region of the window (210) and a deployed position in which it does not close off said region of the window (210), the inner doors (104) extending towards the engine in the deployed position, the outer doors (105) extending towards the exterior of the nacelle (102) in the deployed position and being disposed between the mobile cowl (207a) and the fixed structure (206) in the stowed position so as to constitute an outer wall of the nacelle (102),
- for each pair of doors (104, 105), a slider (214) associated with said pair of doors (104, 105), said slider (214) being mounted so as to be able to move in translation parallel to the direction of translation on the frame (207b) between a first position and a second position, wherein the passage of each door (104, 105) of said pair from the stowed position to the deployed position is mechanically associated with the passage of the slider (214) from the first position to the second position and vice versa, each slider (214) being made up of an upper slider (802) and a lower slider (804) that are fastened to one another by removable fastening means,
- for each slider (214), a first link rod (216) articulated by one end to the inner door (104) and articulated by another end to the upper slider (802) of said slider (214), and a second link rod (217) articulated by one end to the outer door (105) and articulated by another end to the lower slider (804) of said slider (214), and
- for each slider (214), a second actuator (220) designed to move the slider (214) in translation from the first position to the second position and vice versa, and
- at least one first actuator (218) designed to move the frame (207b) in translation from the advanced position to the retracted position and vice versa.

2. Turbofan (100) according to Claim 1, **characterized in that** the frame (207b) has a rail (215) along which the slider (214) moves in translation between the first position and the second position, **in that** the rail (215) has a port-side rail (215a) and a starboard-side rail (215b) that are parallel to one another, **in that** the port-side rail (215a) and the starboard-side rail (215b) each have an upper face (902) and a lower face (904) that are parallel to one another, **in that** the port-side rail (215a) has an inner face (906), **in that** the starboard-side rail (215b) has an inner face (906) oriented towards the inner face (906) of the port-side rail (215a) so as to delimit a space (806) between them, **in that** the slider (214) is disposed in the space (806), **in that** the slider (214) has, for the upper face (902) of the port-side rail (215a) and for the upper face (902) of the starboard-side rail (215b), an upper bearing face that bears against said upper face (902), **in that** the slider (214) has, for the lower face (904) of the port-side rail (215a) and of the starboard-side rail (215b), a lower bearing face that bears against said lower face (904), **in that** the slider (214) has, for the inner face (906) of the port-side rail (215a), an inner bearing face that bears against said inner face (906), and **in that** the slider (214) has, for the inner face (906) of the starboard-side rail (215b), an inner bearing face that bears against said inner face (906) .

3. Turbofan (100) according to Claim 2, **characterized in that** each upper bearing face consists of a surface of the upper slider (802), **in that** each lower bearing face consists of a surface of the lower slider (804), and **in that** each inner bearing face consists of a surface of the upper slider (802).

4. Turbofan (100) according to Claim 2, **characterized in that** each upper bearing face consists of a surface of the upper slider (802), **in that** each lower bearing face consists of a surface of the lower slider (804), and **in that** each inner bearing face consists of a surface of the lower slider (804).

5. Turbofan (100) according to one of Claims 2 to 4, **characterized in that** the upper slider (802) takes the form of an arch of which each foot is fastened to the lower slider (804), **in that** one of the feet has an oblong hole (1006), **in that** the other foot has a circular hole (1004) of which the centre is aligned with the longitudinal axis of the oblong hole (1006), and **in that** the lower slider (804) has, for each hole (1004, 1006), a circular peg (1008, 1010) that is inserted into said hole (1004, 1006) such that it is fitted with a precise clearance.

6. Turbofan (100) according to one of Claims 2 to 5, **characterized in that** each bearing surface has a pad (810) that is fixed to said bearing surface and bears against the surface of the facing rail (215a-b).

7. Turbofan (100) according to Claim 6, **characterized in that** each pad (810) has an adjustable thickness.

8. Aircraft (10) having at least one turbofan (100) according to one of the preceding claims.
